# EUROPÄISCHE PATENTANMELDUNG

(11) **EP 2 322 345 A1**
(43) Veröffentlichungstag der Anmeldung: **18.05.2011**
(21) Anmeldenummer: 09013931.2
(22) Anmeldetag: 06.11.2009
(51) Int. Cl.: B32B 27/40, B32B 27/08, B32B 37/18

(54) **Schichtverbund mit elektrischen und/oder elektronischen Funktionselementen**

(71) Anmelder: Bayer MaterialScience AG, 51368 Leverkusen (DE)
(72) Erfinder: Dierksen, Karsten, Dr., 51107 Köln (DE); Steenblock, Roland, 51375 Leverkusen (DE)

(57) **Zusammenfassung**

Ein Schichtenverbund umfasst zwei Schichten (10, 20) aus thermoplastischem Polymer und dazwischen angeordneten elektrischen und/oder elektronischen Funktionselementen (30, 31). Eine der Schichten (20) ist ein thermoplastisches Polyurethanpolymer mit einer Erweichungstemperatur nach Kofler von ≥140 °C bis ≤180 °C, einer Shore A-Härte von ≥50 bis ≤95 und einer Dicke von ≥0,025 mm. Die Erfindung betrifft weiterhin ein Verfahren zur Herstellung eines solchen Verbundes, und dessen Verwendung zur Herstellung dreidimensional geformter Artikel. Weitere Gegenstände der Erfindung sind solche Schichtenverbunde umfassende Artikel sowie Verfahren zur Herstellung solcher Artikel.

## Beschreibung

Die vorliegende Erfindung betrifft einen Schichtenverbund, umfassend zwei Schichten aus thermoplastischem Polymer und dazwischen angeordneten elektrischen und/oder elektronischen Funktionselementen. Sie betrifft weiterhin ein Verfahren zur Herstellung eines solchen Verbundes, und dessen Verwendung zur Herstellung dreidimensional geformter Artikel. Weitere Gegenstände der Erfindung sind solche Schichtenverbunde umfassende Artikel sowie Verfahren zur Herstellung solcher Artikel.

Im Automobilbereich werden Bauteile als einzelne Bedien-, Funktions- und Anzeigeelemente in einem Kunststoff-Innenausstattungsteil verbaut. Sie sind jedoch keine integrativen Bestandteile dieses Innenausstattungsteils. So werden beispielsweise Schalter oder optische Anzeigen nachträglich in Öffnungen des Innenausstattungsteils eingesetzt. Dieses hat zum einen fertigungstechnische Nachteile, beispielsweise hinsichtlich der Kosten, der Bautiefe und des Designs. Zum anderen sind unterbrochene Oberflächen im Innenausstattungsteil weniger leicht zu reinigen.

Ein Beispiel für solch ein Element wird in US 2005/0206623 A1 gegeben. Diese Patentanmeldung betrifft einen berührungsempfindlichen elektrolumineszierenden Schalter in einem Fahrzeug, welcher ein Fahrzeugteil ansteuert. Eine dielektrische Schicht liegt benachbart zu einer hinteren Elektrodenschicht und eine Leuchtschicht liegt benachbart zur dielektrischen Schicht. Weiterhin beinhaltet eine transparente Elektrodenschicht ein Pad benachbart zur Leuchtschicht und eine im Wesentlichen konzentrische Leitspur liegt benachbart zur Leuchtschicht vor und ist vom Pad in der transparenten Elektrodenschicht beabstandet. Die Leuchtschicht ist zwischen der hinteren Elektrodenschicht und dem Pad angeordnet und definiert eine Region, wenn eine erste Spannung angelegt wird. Die im Wesentlichen leitfähige Spur und das Pad wirken zusammen, um eine Erkennungsregion zu bilden, welche im Wesentlichen mit der Beleuchtungsregion übereinstimmt, wenn eine zweite Spannung angelegt wird.

EP 1 471 459 A2 offenbart ein organisches Leuchtdioden-Display (OLED-Display) und berührungsempfindlichen Bildschirm mit einem Substrat, einem OLED-Display mit einer Anordnung von einzeln adressierbaren organischen Leuchtdioden auf dem Substrat. Ein berührungsempfindlicher Bildschirm beinhaltet einen auf dem Substrat gebildeten OLED-Laser als Lichtemitter. Ein auf dem Substrat gebildeter Lichtsensor liegt auf dem Display gegenüber dem Lichtemitter. Weiterhin sind Optiken um das Display herum oberhalb des Lichtemitters und des Lichtsensors angeordnet, um von den OLED-Lasern emittiertes Licht über das Display hinweg zu dem Lichtsensor zu leiten.

Die Integration einer Berührungsschalteinrichtung beispielsweise für Glaskeramik-Kochflächen in dekorierte Bedienblenden über automatisierte, standardisierte Druck-, Beschichtungs- und Abtragprozesse wird in DE 10 2004 026 672 A1 beschrieben. Die Patentanmeldung betrifft eine Berührungsschalteinrichtung mit mindestens einer kapazitiven Berührungs- oder Touchsensorelektrode, die an der dem Bediener abgewandten Seite einer durchgängigen, ein dielektrisches Trägermaterial aufweisenden Bedienblende im Bedienbereich angeordnet ist. An der dem Bediener abgewandten Seite der Bedienblende ist eine elektrisch leitende Schicht angeordnet, welche in mindestens einen elektrisch isolierten flächigen Bereich beziehungsweise elektrisch isolierte flächige Bereiche strukturiert ist, durch welche die mindestens eine kapazitive Berührungs- oder Touchsensorelektrode definiert ist. An Kontaktbereichen, die zur Touchsensorelektrode gehören, wird eine Schaltelektronik über eine Anschlussschicht durch eine elektrisch nichtleitende, dielektrische Schicht kapazitiv angekoppelt.

Flexible berührungsempfmdliche Bildschirme werden in EP 1 471 414 A2 offenbart. Solche Bildschirme enthalten ein transparentes, flexibles Substrat, eine erste leitfähige Schicht auf dem flexiblen Substrat, eine flexible transparente Deckschicht mit integrierten kompressiblen Abstandsnoppen und eine zweite leitfähige Schicht auf der flexiblen transparenten Deckschicht. Die Spitzen der integrierten kompressiblen Abstandsnoppen reichen durch die zweite leitfähige Schicht hindurch. Wenn eine Kraft auf den Bildschirm am Ort einer der kompressiblen Abstandsnoppen ausgeübt wird, wird die Abstandsnoppe zusammengedrückt, so dass ein elektrischer Kontakt zwischen der ersten und der zweiten elektrisch leitfähigen Schicht ermöglicht wird.

Für die Einbindung in Fertigungsprozesse sind flexible Systeme von besonderem Interesse, da sie eine ein hohes Maß an Gestaltungsfreiheit mit sich bringen. WO 98/49871 beschreibt einen Kunststoff-Formkörper mit integriertem optoelektronischen Leuchtelement und ein Verfahren zu dessen Herstellung. Dabei wird eine, mindestens im Bereich der Leuchtelemente transluzente und kaltreckbare Kunststoff-Folie dreidimensional verformt und darauf mit thermoplastischem Kunststoff hinterspritzt. Vor der Verformung der Kunststoff-Folie werden die Leuchtelemente im Siebdruck in Form von Leuchtfeldern auf die unverformte Folie gebracht.

WO 2008/131305 A1 offenbart einen Gegenstand mit einem eingeformten kapazitiven Schalter und ein Verfahren zu dessen Herstellung. In der Herstellung wird in einem Verfahren eine Sensorzone mittels leitfähiger Tinte auf einen Film gedruckt. Der Film wird in die gewünschte Form gebracht und in eine Spritzgussform eingelegt.

Beim Verformen von Kunststofflaminaten, welche beispielsweise Leuchtelemente in ihrem Inneren enthalten, sollte darauf geachtet werden, dass sich eine Deckschicht nicht von einer

Substratschicht löst. Weiterhin sollten die Leuchtelemente während des Verformens keinen Schaden nehmen.

EP 1 234 660 A1 offenbart einen Schichtstoff auf Basis bedruckter Folien aus transparentem thermoplastischem Polyurethan und einem Grundkörper aus thermoplastischem Kunststoff, bei dem die Druckschicht zwischen dem Grundkörper und der Polyurethanfolie angeordnet ist. Gemäß einer bevorzugten Ausführungsform werden die Folien aus thermoplastischem Polyurethan mit einer Erweichungstemperatur (nach Kofler) von 140 °C bis 180 °C, vorzugsweise 155 °C bis 170 °C hergestellt und haben eine Härte von 50 Shore A bis 95 Shore A, vorzugsweise von 65 Shore A bis 90 Shore A haben. Die Dicke der Folien beträgt mindestens 0,025 mm, bevorzugt 0,05 bis 0,5 mm, besonders bevorzugt 0,08 bis 0,3 mm. Eine Verformung von Druckfarbenschichten ist jedoch unkritischer als eine Verformung von elektronischen Elementen, da bei letzteren ein Funktionsverlust eintreten kann.

Aus dem Vorangegangenen wird deutlich, dass weiterhin ein Bedarf besteht an verformbaren, Leuchtelemente oder andere Funktionselemente umfassenden Folienlaminaten.

Erfmdungsgemäß vorgeschlagen wird daher ein Schichtenverbund, umfassend:
eine erste Schicht, umfassend ein thermoplastisches Polymer;
eine zweite Schicht, welche ein thermoplastisches Polyurethanpolymer mit einer Erweichungstemperatur nach Kofler von ≥140 °C bis ≤180 °C, einer Shore A-Härte von ≥50 bis ≤95 und einer Dicke von ≥0,025 mm umfasst; und
zwischen der ersten und der zweiten Schicht angeordnete elektrische und/oder elektronische Funktionselemente.

Die Kombination der Erweichungstemperatur und der Shore A-Härte im thermoplastischen Polyurethan bewirkt eine bestimmte Klebefähigkeit und Verformbarkeit des Polymers. Daher kann es während des Verformens des Schichtenverbundes, beispielsweise im Tiefziehverfahren, schützend auf die Funktionselemente wirken. Aufgrund der Klebefähigkeit des Polyurethans wird weiterhin die Gestalt eines verformten Schichtenverbundes stabilisiert.

Die ein thermoplastisches Polymer umfassende erste Schicht kann beispielsweise eine Dicke von ≥ 0,1 mm bis ≤19 mm aufweisen. Weiterhin kann sie mehrlagig aufgebaut sein. Es ist ebenfalls möglich, dass diese Schicht transparent ist.

Die zweite Schicht umfasst ein thermoplastisches Polyurethan (TPU). Sie kann ebenfalls transparent sein. Vorzugsweise handelt es sich bei dem Polymer der zweiten Schicht um ein thermoplastisches Polyurethan-Elastomer. Diese Elastomere sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Ein weiterer Vorteil der Polyurethan-Elastomere liegt in ihren dielektrischen Eigenschaften begründet. Aufgrund der hohen Variabilität der chemischen Bausteine können mechanische und elektrische Eigenschaften (zum Beispiel die Isolationswirkung) gezielt einstellt und aufeinander abgestimmt werden. Die elektrischen Eigenschaften können beispielsweise durch die chemische Zusammensetzung aber auch durch Hinzufügen von Füllstoffen (organische und anorganische) eingestellt werden.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Bewährt haben sich molare Verhältnisse von Polyolen zu Kettenverlängerern von 1:1 1 bis 1:12. Hierdurch ergeben sich Produkte im Bereich von 70 Shore A bis 75 Shore D. Der Aufbau der thermoplastisch verarbeitbaren Polyurethanelastomeren kann entweder schrittweise (Prepolymerverfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Das thermoplastische Polyurethanpolymer in der zweiten Schicht weist eine Erweichungstemperatur nach Kofler von ≥140 °C bis ≤180 °C und vorzugsweise von ≥155 °C bis ≤ 170 °C auf. Neben den bereits erwähnten Vorteilen der ausgewählten Erweichungstemperatur haben bevorzugte TPU-Schichten in diesen genannten Bereichen eine geringe Schmelzviskosität und können hinterspritzt werden.

Bei der Erweichungstemperatur nach Kofler handelt es sich um die Erweichungstemperatur gemessen auf der Kofler-Bank. Diese Messung kann beispielsweise derart erfolgen, dass ein Streifen einer Folie (1cm x 8cm) aus dem thermoplastischen Polyurethanpolymer mit einer Pinzette im Bereich der zu erwartenden Erweichungstemperatur auf die Kofler-Bank aufgelegt und angedrückt wird und die Abrisstemperatur bestimmt wird, indem man nach 2 min bei Blasfolien bzw. nach 5 min bei Flachfilmen beginnt, die Folie mit einem Spatel von der Heizbank zu kratzen und die Temperatur bestimmt, bei der die Folie abreißt. Bei den Messungen ist darauf zu achten, dass die Kofler-Bank an einem Platz ohne Zugluft steht. Die erste Messung kann 1 h nach dem Aufheizen gestartet werden. Die Kalibrierung der Kofler-Bank erfolgt nach jeder Messung, indem eine kleine Menge der verwendeten Kalibriersubstanz mit bekannter Erweichungstemperatur im Temperaturbereich um die zu erwartende Erweichungstemperatur aufgebracht wird, nach frühestens 10 s der bewegliche Läufer so eingestellt wird, dass der Zeiger genau auf die Grenze zwischen der geschmolzenen und der nicht geschmolzenen Substanz zeigt, diese Temperatur abgelesen und die Differenz dieses Messwertes zum Sollwert der Kalibriersubstanz berechnet wird. Der errechnete Wert wird als Korrekturfaktor der Messung der Erweichungstemperatur des thermoplastischen Polyurethanpolymers verwendet und bei jeder Messung ermittelt. Die Bestimmung der Erweichungstemperatur wird in der Regel als Dreifachbestimmung durchgeführt.

Weiterhin weist das TPU der zweiten Schicht eine Shore A-Härte von ≥50 bis ≤ 95 und vorzugsweise von ≥65 bis ≤90 auf. Die Shore-Härte lässt sich mittels DIN 53505/ISO 868 bestimmen. Neben den bereits erwähnten Vorteilen dieser Shore A-Härten erhält hierdurch diese Schicht eine für den Verbraucher angenehme Haptik.

Die Dicke der zweiten Schicht beträgt ≥0,025 mm, bevorzugt ≥0,05 bis ≤0,5 mm, besonders bevorzugt ≥0,08 bis ≤0,3 mm. Die bevorzugte Dicke ermöglicht eine rasche Wärmeabfuhr nach dem Aufspritzen des Grundkörpers. Die besonders bevorzugte Dicke ermöglicht zusätzlich die Verwendung auch höherschmelzender Thermoplaste.

Elektrische und/oder elektronische Funktionselemente im Rahmen der vorliegenden Erfindung sind den elektrischen Strom leitende Elemente wie zum Beispiel Leiterbahnen, den elektrischen Strom beeinflussenden Elemente wie zum Beispiel Schalter und/oder durch den elektrischen Strom beeinflusste Elemente wie zum Beispiel leuchtende Elemente. Die Funktionselemente können, ohne hierauf beschränkt zu sein, verformbar sein. Wenn sie nicht verformbar sind, können sie zum Beispiel so klein ausgeführt sein, dass sie trotzdem der neuen Kontur nach einem Verformen folgen können. Die Funktionselemente können beispielweise auf die erste oder zweite Schicht aufgelegt oder aber aufgedruckt werden.

In einer Ausführungsform des erfindungsgemäßen Schichtenverbundes ist in der ersten Schicht das thermoplastische Polymer ausgewählt aus der Gruppe umfassend Polyamid, Polyester, Polyolefin, Styrolcopolymerisat, Polyphenylenoxid, Polycarbonat, Polyphenylensulfid, Polyvinylchlorid, Polyurethan, Polysulfon und/oder Polyetheretherketon. Insbesondere Polycarbonatfolien eignen sich aufgrund ihrer Transparenz und ihrer Bedruckbarkeit als Substratschicht in dem erfindungsgemäßen Schichtenverbund.

In einer weiteren Ausführungsform des erfindungsgemäßen Schichtenverbundes ist in der zweiten Schicht das thermoplastische Polyurethanpolymer erhältlich aus der Umsetzung eines Reaktionsgemisches umfassend:
A) organische Polyisocyanate
B) lineare hydroxylterminierte Polyole mit einem Molekulargewicht von ≥500 g/mol bis ≤ 5000 g/mol und
C) Diol- oder Diamin-Kettenverlängerer mit einem Molekulargewicht von ≥60 g/mol bis ≤500 g/mol,
wobei das Molverhältnis der NCO-Gruppen in A) zu den gegenüber Isocyanat reaktiven Gruppen in B) und C) ≥0,9 bis ≤1,2 beträgt.

Als organische Polyisocyanate A) kommen beispielsweise aliphatische, cycloaliphatische, araliphatische, heterocyclische und aromatische Diisocyanate in Betracht.

Im einzelnen seien beispielhaft genannt: aliphatische Diisocyanate wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexandiisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines mehrkernigen Polyisocyanates verwendet werden, beispielsweise Triphenylmethan-4,4',4"-triisocyanat oder Polyphenylpolymethylen-polyisocyanaten.

Als Komponente B) werden lineare hydroxylterminierte Polyole mit einem Molekulargewicht von ≥500 g/mol bis ≤5000 g/mol eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien zum Beispiel genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im Wesentlichen linearen Polyether-Diole besitzen Molekulargewichte von ≥500 g/mol bis ≤5000 g/mol. Sie können sowohl einzeln als auch in Form von Mischungen untereinander zur Anwendung kommen.

Geeignete Polyester-Diole können beispielsweise aus Dicarbonsäuren mit 2 bis 12 KohlenstoffAtomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, zum Beispiel in Form einer Bernstein-, Glutar-und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykolpolyadipate, 1,6-Hexandiol-1,4-butandiol-polyadipate und Poly-Caprolactone. Die Polyester-Diole besitzen Molekulargewichte von 500 bis 5000 und können einzeln oder in Form von Mischungen untereinander zur Anwendung kommen.

Als Kettenverlängerungsmittel C) werden Diole oder Diamine mit einem Molekulargewicht von ≥ 60 g/mol bis ≤500 g/mol eingesetzt, vorzugsweise aliphatische Diole mit 2 bis 14 Kohlenstoffatomen, wie zum Beispiel Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie zum Beispiel Terephthalsäurebis-ethylenglykol oder Terephthalsäure-bis-1,4-butandiol, Hydroxyalkylenether des Hydrochinons, wie zum Beispiel 1,4-Di(-hydroxyethyl)-hydrochinon, ethoxylierte Bisphenole, (cyclo)aliphatische Diamine, wie zum Beispiel Isophorondiamin, Ethylendiamin, 1,2-Propylendiamin, 1,3-Propylendiamin, N-Methyl-propylen-1,3-diamin, N,N'-Dimethyl-ethylendiamin und aromatische Diamine, wie zum Beispiel 2,4-Toluylen-diamin und 2,6-Toluylen-diamin, 3,5-Diethyl-2,4-toluylen-diamin und 3,5-Diethyl-2,6-toluylendiamin und primäre mono-, di-, tri- oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, zum Beispiel als Kettenabbrecher oder Entformungshilfen. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Diole/Triole und Polyole ≥0,9:1,0 bis ≤ 1,2:1,0, vorzugsweise ≥0,95:1,0 bis ≤1,10:1,0 beträgt.

Geeignete Katalysatoren sind die nach dem Stand der Technik bekannten und üblichen tertiären Amine, wie zum Beispiel Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, zum Beispiel Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und Zusatzstoffe zugesetzt werden. Genannt seien beispielsweise Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe zur Beeinflussung mechanischer und/oder dielektrischer Eigenschaften und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen.

Weitere Zusätze, die in das TPU eingearbeitet werden können, sind Thermoplaste, beispielsweise Polycarbonate und Acrylnitril-Butadien-Styrol-Terpolymerisate, insbesondere ABS. Ebenfalls können andere Elastomere wie Kautschuk, Ethylen-Vinylacetatcopolymerisate, Styrol-Butadiencopolymerisate sowie andere TPU verwendet werden. Weiterhin zur Einarbeitung geeignet sind handelsübliche Weichmacher wie Phosphate, Phthalate, Adipate, Sebacate und Alkylsulfonsäureester.

Die erfindungsgemäß verwendbaren TPU können kontinuierlich im sogenannten Extruderverfahren, zum Beispiel in einem Mehrwellenextruder, hergestellt werden. Die Dosierung der TPU-Komponenten A), B) und C) kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

In einer weiteren Ausführungsform des erfindungsgemäßen Schichtenverbundes umfasst das thermoplastische Polyurethanpolymer in der zweiten Schicht weiterhin als Füllstoff Ruß. Solche Ruße sind vor allem feindisperse Rußtypen, insbesondere Acetylenruß, wie sie beispielsweise nach dem Degussa Gas-Black-Verfahren hergestellt werden können. Vorteilhaft eingesetzt werden Rußtypen mit einer mittleren Teilchengröße von ≤ 1 µm, bevorzugt ≤ 100 nm und besonders bevorzugt ≤50 nm. Die Ruße können gleichzeitig eine große BET-Oberfläche aufweisen, wobei die BET-Oberfläche ≥ 250 m²/g, bevorzugt ≥500 m²/g und besonders bevorzugt ≥900 m²/g beträgt. Der Ruß kann in dem Polyurethan beispielsweise in einem Anteil von ≥0,1 Gewichts-% bis ≤30 Gewichts-% vorliegen.

In einer weiteren Ausführungsform des erfindungsgemäßen Schichtenverbundes sind die elektrischen und/oder elektronischen Funktionselemente unter Erhaltung ihrer Funktion flexibel. Der Begriff "flexibel" bedeutet hierbei, dass die Funktionselemente plastisch oder elastisch verformbar sind. Weiterhin behalten die Funktionselemente auch bei flexibler Beanspruchung ihre Funktion bei. Hierunter ist beispielsweise zu verstehen, dass eine Leiterbahn weiterhin den elektrischen Strom leitet oder dass ein Leuchtelement weiter leuchtet.

In einer weiteren Ausführungsform des erfindungsgemäßen sind die elektrischen und/oder elektronischen Funktionselemente ausgewählt aus der Gruppe umfassend Lichtelemente, Schalterelemente, Leiterbahnen, Logikelemente, Sensorelemente, Aktoren und/oder Displayelemente. Beispiele für Lichtelemente sind elektrolumineszierende Elemente, Leuchtdioden (LED) oder organische Leuchtdioden (OLED). Diese Lichtelemente können vorteilhafterweise aufgedruckt werden. Selbstverständlich können Hybridsysteme realisiert werden, bei denen (organische) Leuchtdioden aufgedruckt werden und mit Halbleiterelementen kontaktiert sind. Schalterelemente können beispielsweise Kontaktschalter, resistive oder kapazitive Schalter sein. Leiterbahnen verbinden andere Funktionselemente untereinander und mit entsprechender Steuerungs- und Auswerteelektronik. Auch sie werden vorzugsweise mittels druckbarer Tinte erhalten.

Logikelemente sind unter anderem Speicherelemente oder Steuerungselemente mit Transistoren und hieraus aufgebaute Gatter wie AND-, OR- oder NOT-Gatter. Sensorelemente können beispielsweise Photosensoren, Temperatursensoren, chemische Sensoren, Drucksensoren oder piezoelektrische Sensoren sein. Aktoren können aus dielektrischen Elastomeren aufgebaut sein. Ihre Funktion kann darin liegen, auf der Oberfläche des Schichtenverbundes Erhebungen zu erzeugen und so eine taktile Erfassung zu ermöglichen. Beispiele für Displayelemente oder Anzeigeelemente sind Flüssigkristallanzeigen. Eine weitere Kategorie der Displayelemente sind sogenannte "low content displays" mit einer geringen Anzahl von Pixeln, dafür aber mit großen Pixelabmessungen. Solche Pixel können Größen um 0,5 mm² aufweisen. Die "low content displays" haben typischerweise weniger als 10000 einzelne Pixel.

In einer weiteren Ausführungsform des erfindungsgemäßen Schichtenverbundes ist zwischen der ersten Schicht und den elektrischen und/oder elektronischen Funktionselementen eine weitere Schicht angeordnet, welche ein vom thermoplastischen Polymer der ersten Schicht verschiedenes thermoplastisches Polymer umfasst. Beispiele für geeignete Polymere der weiteren Schicht sind die bereits vorstehend erwähnten thermoplastischen Polyurethane. Solch eine weitere Schicht kann als thermische Isolierschicht für die elektrischen und/oder elektronischen Funktionselemente dienen, wenn zum Verformen der ersten Schicht Temperaturen oberhalb der Beständigkeitstemperatur dieser Elemente angewandt werden müssen.

In einer weiteren Ausführungsform des erfindungsgemäßen Schichtenverbundes sind die elektrischen und/oder elektronischen Funktionselemente durch die erste und die zweite Schicht vollständig umhüllt. Dieses bedeutet, dass die Funktionselemente im erfindungsgemäßen Schichtenverbund verkapselt sind. Auf diese Weise sind sie gegen Umwelteinflüsse besser geschützt.

Die Erfindung betrifft weiterhin ein Verfahren zur Herstellung eines erfindungsgemäßen Schichtenverbundes, umfassend die Schritte:
Bereitstellen einer Schicht ausgewählt aus erster Schicht und zweiter Schicht;
Bereitstellen von elektrischen und/oder elektronischen Bauelementen auf der zuvor bereitgestellten Schicht;

Auflaminieren der anderen Schicht aus erster Schicht und zweiter Schicht auf die die elektrischen und/oder elektronischen Bauelemente umfassende Anordnung.

Bezüglich näherer Erläuterungen zu der ersten Schicht, der zweiten Schicht und den elektrischen und/oder elektronischen Funktionselementen wird zur Vermeidung von Wiederholungen auf die Ausführungen im Zusammenhang mit dem Schichtenverbund verwiesen.

Es können im erfindungsgemäßen Verfahren folglich entweder zuerst die erste Schicht mit den Funktionselementen versehen werden, gefolgt vom Auflaminieren der zweiten Schicht oder aber die zweite Schicht mit den Funktionselementen versehen werden und anschließend die erste Schicht auflaminiert werden. Weiterhin ist eine Kombination denkbar, wonach ein Teil der Funktionselemente auf der ersten Schicht und ein Teil der Funktionselemente auf der zweiten Schicht bereitgestellt werden und die beiden funktionalisierten Schichten danach zusammenlaminiert werden.

In einer Ausführungsform des erfindungsgemäßen Verfahrens geschieht das Bereitstellen der elektrischen und/oder elektronischen Bauelemente zumindest teilweise mittels Drucken. Geeignete Druckverfahren umfassen Tintenstrahldrucken und Siebdrucken. Elektrische Leiterbahnen können zum Beispiel mit silberbasierten Tintenstrahldruckfarben erhalten werden. Komplexere Elemente wie organische Leuchtdioden können durch wiederholtes Siebdrucken verschiedener Schichten aufeinander aufgebaut werden.

Ein weiterer Gegenstand der vorliegenden Erfindung ist die Verwendung eines erfmdungsgemäßen Schichtenverbundes zur Herstellung von dreidimensional geformten Artikeln. Dreidimensional geformte Artikel sind zunächst alle Artikel, welche nicht nur zweidimensionale, flächenhafte Gestalt wie beispielsweise eine flache Folie aufweisen.

In einer Ausführungsform der erfindungsgemäßen Verwendung ist der Artikel ausgewählt aus der Gruppe umfassend Innenausstattungsteile von Kraftfahrzeugen und/oder medizinische Geräte. Innenausstattungen von Kraftfahrzeugen können Anzeigeelemente wie Tachometer, Drehzahlmesser oder Multifunktions-Anzeigen oder -Eingabeelemente sein. Mit Multifunktionselementen können zum Beispiel Radio, Klimaanlage und dergleichen im Kraftfahrzeug bedient werden. In medizinischen Geräten wie Glucometern kommt der Vorteil des erfindungsgemäßen Schichtenverbundes zum Tragen, wonach die äußere Oberfläche zur Aufnahme der elektrischen und/oder elektronischen Funktionselemente nicht unterbrochen zu sein braucht. Dieses bringt hygienische Vorteile mit sich.

Die Erfindung betrifft weiterhin einen Artikel, umfassend einen dreidimensional geformten erfindungsgemäßen Schichtenverbund. Beispiele für Artikel wurden bereits vorstehend genannt.

Ein weiterer Gegenstand der Erfindung ist ein Verfahren zur Herstellung eines erfindungsgemäßen Artikels, umfassend die Schritte:
Bereitstellen eines erfindungsgemäßen Schichtenverbundes;
Verformen des Schichtenverbundes unter Einwirkung von Wärme, Zug und/oder Druck.

Hierbei ist es möglich, dass der erfindungsgemäße Schichtenverbund für sich alleine verformt wird und nach dem Verformen mit weiteren Teilen zusammengefügt wird, um den Artikel zu erhalten.

Geeignete Verformungsverfahren sind unter anderem Tiefziehverfahren. Das Verformen des Schichtenverbundes geschieht vorteilhafterweise bei einer Temperatur oberhalb der Glasübergangstemperatur (Tg) der Polymere und unterhalb der Schmelztemperatur. Beispielsweise kann das Verformen bei einer Temperatur von ≥ 130 °C bis ≤ 190 °C ablaufen. Zu weiteren Details kann auf das Buch "Thermoformen in der Praxis" von Peter Schwarzmann, welches von der Illig Maschinenbau GmbH & Co. herausgegeben wurde und im Hanser Verlag erschienen ist, verwiesen werden.

Durch das Verformen können weitere funktionelle Strukturen auf der Oberfläche des Schichtenverbundes erhalten werden. Solche Strukturen können zum Beispiel optische Linsen sein. Diese könnten die Funktion von Leuchtelementen unterstützen. Andere Strukturen können Kanäle und Vertiefungen sein. Solche Kanäle könnten bei Glucometern das zu analysierende Blut sammeln.

In einer Ausführungsform des erfindungsgemäßen Verfahrens wird der Schichtenverbund auf einem Substrat bereitgestellt und der Schichtenverbund und das Substrat werden gemeinsam verformt. Auf diese Weise erhält man in einem Schritt einen durch den erfindungsgemäßen Schichtenverbund funktionalisierten dreidimensional geformten Artikel.

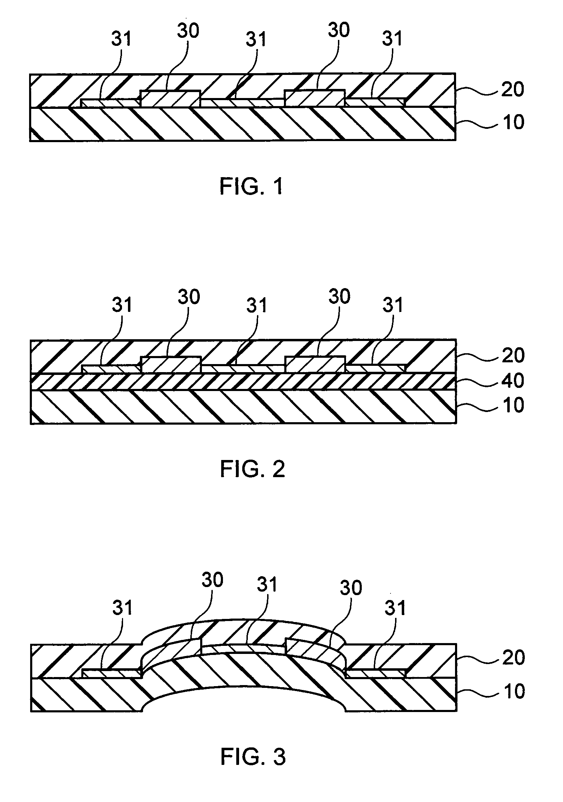

Die vorliegende Erfindung wird anhand der nachfolgenden Zeichnungen weiter erläutert. Es zeigen:
- FIG.: 1 einen erfindungsgemäßen Schichtenverbund
- FIG. 2: einen weiteren erfindungsgemäßen Schichtenverbund
- FIG.: 3 einen verformten erfindungsgemäßen Schichtenverbund

FIG. 1 zeigt einen erfindungsgemäßen Schichtenverbund mit einer ein thermoplastisches Polymer umfassenden ersten Schicht 10. Auf dieser ersten Schicht sind elektrische und/oder elektronische Funktionselemente 30, 31 angebracht. Beispielsweise können organische Leuchtdioden (OLEDs) 30 mittels aus leitfähiger Tinte gedruckten Leiterbahnen 31 untereinander verbunden werden. Über den Funktionselementen 30, 31 befindet sich die zweite Schicht 20 mit dem thermoplastischen Polyurethanpolymer. Hier zu sehen ist, wie die Schichten 10 und 20 die Funktionselemente 30, 31 vollständig umhüllen. Auf diese Weise sind die Funktionselemente 30, 31 gegen Umwelteinflüsse abgeschirmt.
FIG. 2 zeigt einen weiteren erfmdungsgemäßen Schichtenverbund, welcher im Unterschied zu dem Verbund aus FIG. 1 noch zwischen den Funktionselementen 30, 31 und der ersten Schicht 10 eine weitere Schicht 40 eines thermoplastischen Polymers aufweist.
FIG. 3 zeigt einen verformten erfindungsgemäßen Schichtenverbund, wie er aus dem in FIG. 1 dargestellten Verbund erhalten werden kann. Im Zentralbereich des Schichtenverbundes wurde mittels eines Werkzeuges auf der Unterseite des Schichtenverbundes eine Kavität und entsprechend auf der Oberseite des Schichtenverbundes eine Auswölbung erzeugt. Die Funktionselemente 30 und eines der Funktionselemente 31 wurden dabei mit verformt. Für den Fall, dass die zweite Schicht 20 transparent ist und Funktionselemente 30 Leuchtelemente sind, lassen sich beispielsweise Linsenanordnungen realisieren.

## Patentansprüche

1. Schichtenverbund, umfassend:
eine erste Schicht (10), umfassend ein thermoplastisches Polymer;
eine zweite Schicht (20), welche ein thermoplastisches Polyurethanpolymer mit einer Erweichungstemperatur nach Kofler von ≥140 °C bis ≤180 °C, einer Shore A-Härte von ≥50 bis ≤95 und einer Dicke von ≥0,025 mm umfasst; und
zwischen der ersten (10) und der zweiten (20) Schicht angeordnete elektrische und/oder elektronische Funktionselemente (30).

2. Schichtenverbund gemäß Anspruch 1, wobei in der ersten Schicht (10) das thermoplastische Polymer ausgewählt ist aus der Gruppe umfassend Polyamid, Polyester, Polyolefin, Styrolcopolymerisat, Polyphenylenoxid, Polycarbonat, Polyphenylensulfid, Polyvinylchlorid, Polyurethan, Polysulfon und/oder Polyetheretherketon.

3. Schichtenverbund gemäß Anspruch 1, wobei in der zweiten Schicht (20) das thermoplastische Polyurethanpolymer erhältlich ist aus der Umsetzung eines Reaktionsgemisches umfassend:
A) organische Polyisocyanate
B) lineare hydroxylterminierte Polyolen mit einem Molekulargewicht von ≥500 g/mol bis ≤5000 g/mol und
C) Diol- oder Diamin-Kettenverlängerer mit einem Molekulargewicht von ≥60 g/mol bis ≤500 g/mol,
wobei das Molverhältnis der NCO-Gruppen in A) zu den gegenüber Isocyanat reaktiven Gruppen in B) und C) ≥0,9 bis ≥1,2 beträgt.

4. Schichtenverbund gemäß Anspruch 1, wobei das thermoplastische Polyurethanpolymer in der zweiten Schicht (20) weiterhin als Füllstoff Ruß umfasst.

5. Schichtenverbund gemäß Anspruch 1, wobei die elektrischen und/oder elektronischen Funktionselemente (30) unter Erhaltung ihrer Funktion flexibel sind.

6. Schichtenverbund gemäß Anspruch 1, wobei die elektrischen und/oder elektronischen Funktionselemente (30) ausgewählt sind aus der Gruppe umfassend Lichtelemente, Schalterelemente, Leiterbahnen, Logikelemente, Sensorelemente, Aktoren und/oder Displayelemente.

7. Schichtenverbund gemäß Anspruch 1, wobei zwischen der ersten Schicht (10) und den elektrischen und/oder elektronischen Funktionselementen (30) eine weitere Schicht (40) angeordnet ist, welche ein vom thermoplastischen Polymer der ersten Schicht (10) verschiedenes thermoplastisches Polymer umfasst.

8. Schichtenverbund gemäß Anspruch 1, wobei die elektrischen und/oder elektronischen Funktionselemente (30) durch die erste (10) und die zweite (20) Schicht vollständig umhüllt sind.

9. Verfahren zur Herstellung eines Schichtenverbundes gemäß Anspruch 1, umfassend die Schritte:
Bereitstellen einer Schicht ausgewählt aus erster Schicht (10) und zweiter Schicht (20);
Bereitstellen von elektrischen und/oder elektronischen Bauelementen (30) auf der zuvor bereitgestellten Schicht;
Auflaminieren der anderen Schicht aus erster Schicht (10) und zweiter Schicht (20) auf die die elektrischen und/oder elektronischen Bauelemente (30) umfassende Anordnung.

10. Verfahren gemäß Anspruch 9, wobei das Bereitstellen der elektrischen und/oder elektronischen Bauelemente (30) zumindest teilweise mittels Drucken geschieht.

11. Verwendung eines Schichtenverbundes gemäß Anspruch 1 zur Herstellung von dreidimensional geformten Artikeln.

12. Verwendung gemäß Anspruch 11, wobei der Artikel ausgewählt ist aus der Gruppe umfassend Innenausstattungsteile von Kraftfahrzeugen und/oder medizinische Geräte.

13. Artikel, umfassend einen dreidimensional geformten Schichtenverbund gemäß Anspruch 1.

14. Verfahren zur Herstellung eines Artikels gemäß Anspruch 13, umfassend die Schritte:
Bereitstellen eines Schichtenverbundes gemäß Anspruch 1;
Verformen des Schichtenverbundes unter Einwirkung von Wärme, Zug und/oder Druck.

15. Verfahren gemäß Anspruch 14, wobei der Schichtenverbund auf einem Substrat bereitgestellt wird und der Schichtenverbund und das Substrat gemeinsam verformt werden.
